# FASCICULE DE BREVET EUROPEEN

(11) **EP 1 066 914 B1**
(45) Date de publication et mention de la délivrance du brevet: **06.04.2005**
(21) Numéro de dépôt: 00401949.3
(22) Date de dépôt: 06.07.2000
(51) Int. Cl.: B23P 19/04, B64F 5/00

(54) **Procédé d'assemblage d'un panneau souple sur une structure ouverte et installation pour la mise en oeuvre de ce procédé**
Verfahren zum Montieren von biegsamen Platten auf eine offene Struktur und Anlage zur Durchführung des Verfahrens
Method for assembling a flexible panel on an open structure and installation for carrying out the method

(30) Priorité: 09.07.1999 BE 9900474
(43) Date de publication de la demande: 10.01.2001
(73) Titulaire: Sonaca S.A., 6041 Gosselies (BE)
(72) Inventeur: Guillou, Jean Noel, 44120 Vertou (FR); Gregoire, André, 4520 Antheit (BE)
(74) Mandataire: Poulin, Gérard

(56) Documents cités:
- FR-A- 2 554 878
- FR-A- 2 611 552
- US-A- 3 616 075
- US-A- 4 783 228
- US-A- 4 894 903

## Description

L'invention concerne un procédé permettant d'assembler un panneau souple sur une structure ouverte, élastiquement déformable et présentant une plus grande rigidité que le panneau. Plus précisément, l'invention concerne une étape de pré-assemblage, au cours de laquelle le panneau est positionné et maintenu sur la structure, avant d'être fixé définitivement à celle-ci au moyen d'organes de fixation mécanique tels que des rivets.

Dans l'ensemble du texte l'expression "panneau souple" désigne de façon générale tout élément de tôle, plaque, paroi ou revêtement, de structure simple ou complexe, réalisé en un matériau métallique ou autre, et présentant une forme, un contour et des dimensions quelconques.

Par ailleurs, l'expression "structure ouverte" désigne toute structure discontinue, simple ou complexe, telle qu'une cornière, une lisse ou une nervure, ou une ossature ajourée formée de plusieurs éléments de ce type, préalablement assemblés.

L'invention concerne également une installation de pré-assemblage permettant de mettre en oeuvre ce procédé.

Le procédé et l'installation selon l'invention trouvent une application privilégiée dans l'industrie aéronautique et plus particulièrement dans un atelier flexible de fabrication d'ensembles ou de sous-ensembles d'aéronefs tels que des bords d'attaque ou, de façon plus générale, des éléments de voilure ou de fuselage.

### Etat de la technique

Dans l'industrie aéronautique, la fixation d'un panneau souple sur une structure plus rigide est habituellement réalisée au moyen d'une pluralité d'organes de fixation mécaniques tels que des rivets ou des boulons, qui traversent à la fois le panneau et la partie attenante de la structure qui le supporte. Ce type d'assemblage impose donc de percer simultanément le panneau et la partie attenante de la structure en un grand nombre de points, avant de mettre en place les organes de fixation.

Pour que l'assemblage soit réalisé de façon satisfaisante, notamment en ce qui concerne le positionnement relatif du panneau et de la structure, il est d'usage de faire précéder la fixation de ces pièces d'une étape de pré-assemblage.

Habituellement, le pré-assemblage des pièces fait appel à la technique dite d'"épinglage". Selon cette technique, des épingles de maintien en référence relient provisoirement le panneau à la structure ouverte, afin d'assurer un positionnement relatif correct de ces deux pièces lors de leur fixation définitive.

Plus précisément, la technique d'épinglage nécessite de réaliser d'abord manuellement un certain nombre de pré-perçages dans le panneau par l'intérieur de la structure, en utilisant des avant-trous de guidage présents dans celle-ci. Le diamètre de ces perçages est inférieur à celui des perçages qui seront effectués ultérieurement pour assurer la fixation définitive des pièces au moyen des organes de fixation mécaniques. Les opérateurs mettent alors en place, progressivement, des épingles de maintien en référence. Des contre-perçages sont ensuite effectués, par l'extérieur, à un diamètre proche du diamètre définitif, avec transfert progressif des épingles de maintien en référence. On procède alors au démontage du panneau, pour l'ébavurer et enlever les copeaux. Les opérateurs placent ensuite du mastic sur la structure, puis remontent le panneau à l'aide des épingles, jusqu'à la polymérisation du mastic.

Pour réaliser l'assemblage définitif, les épingles sont démontées une à une. Après le démontage de chaque épingle, les pièces sont percées ou alésées au diamètre définitif requis et l'organe de fixation, généralement constitué par un rivet, est mis en place. L'opérateur procède ainsi de proche en proche afin de remplacer chacune des épingles par un organe de fixation définitif.

Cette technique d'assemblage traditionnel nécessite en chaque point de fixation des pièces un double perçage et de nombreuses manipulations. Cela peut conduire à des imprécisions d'assemblage et se traduit, dans tous les cas, par des temps d'intervention importants. Ce dernier inconvénient est très pénalisant pour un atelier flexible dont l'objectif majeur est la réduction des coûts et temps de fabrication.

Le document WO 97/34734 propose une technique de fabrication d'ensembles ou de sous-ensembles d'aéronefs, tels que des voilures. Selon cette technique, les pièces de l'ensemble à réaliser sont fabriquées par des machines-outils à commande numérique, qui réalisent également dans ces pièces des perçages de présentation situés en des emplacements précis. Lors de l'assemblage ultérieur des différentes pièces, ces perçages sont utilisés pour fixer directement celles-ci à l'aide d'organes de fixation traditionnels, sans qu'aucun pré-assemblage soit nécessaire.

Cette technique, séduisante en théorie, se heurte dans la pratique à de nombreuses difficultés.

Ainsi, la précision annoncée de l'assemblage n'est obtenue qu'à condition que les perçages de présentation effectués dans chacune des pièces soient bien situés aux emplacements requis. Cet impératif est difficile à satisfaire dans le cas de pièces de formes complexes et relativement souples, comme c'est notamment le cas pour les panneaux formant par exemple les revêtements de la voilure.

En outre, même si cette technique supprime l'opération de pré-assemblage, elle reste coûteuse et relativement longue à mettre en oeuvre.

Par ailleurs, le document FR-A-2 554 878 décrit une installation et un procédé conçus pour fixer un revêtement métallique sur une ossature, afin de réaliser une aile d'avion. La technique proposée dans ce document supprime également toute opération de pré-assemblage.

Dans ce cas, le revêtement métallique est fixé à l'ossature par collage à chaud. A cet effet, on place une ou plusieurs chambres de mise en pression dans un four et on place à l'intérieur de chaque chambre de mise en pression un ensemble incluant l'ossature, le revêtement et une vessie étanche entourant ces pièces. Pour éviter de déformer le revêtement dans les parties ajourées de l'ossature lorsque l'espace intermédiaire entre la vessie et la chambre est mis en pression, on interpose des plaques rigides entre la vessie et le revêtement métallique en face de ces parties ajourées. Ces plaques rigides sont portées par une feuille flexible.

Ce procédé est inadaptée dans de nombreux cas. En effet, le collage à chaud suppose l'application d'une forte pression. Lorsque l'ossature sur laquelle on désire fixer le revêtement n'est pas parfaitement rigide, comme c'est pratiquement toujours le cas dans l'industrie aéronautique, l'application d'une telle pression se traduirait par des déformations permanentes inacceptables. Cette contrainte est encore plus importante lorsque l'ensemble que l'on désire fabriquer n'est pas refermé sur lui-même, comme c'est notamment le cas pour un bord d'attaque de voilure.

Par ailleurs, cette technique a aussi pour inconvénient d'être très difficile à mettre en oeuvre. En effet, le positionnement relatif du revêtement et de l'ossature impose de prévoir des broches de guidage entre ces deux pièces et de créer un vide partiel à l'intérieur de l'assemblage, avant l'application de la pression dans la chambre. Le positionnement des plaques rigides en face des régions ajourées de l'ossature soulève des difficultés comparables. Il y a donc de fortes chances pour que l'ensemble ainsi réalisé ne présente pas les caractéristiques désirées. Cela est évidemment inacceptable compte tenu du coût des ensembles et des sous-ensembles entrant dans la fabrication d'un aéronef.

### Exposé de l'invention

L'invention a pour objet un procédé d'assemblage original d'un panneau souple sur une structure plus rigide, permettant d'effectuer un pré-assemblage de ces pièces de façon beaucoup plus rapide qu'avec la technique traditionnelle d'agrafage, tout en assurant un positionnement aussi précis des pièces.

Conformément à l'invention, il est proposé un procédé d'assemblage d'un panneau souple sur une structure ouverte, élastiquement déformable et présentant une plus grande rigidité que le panneau, selon lequel on réalise successivement un pré-assemblage, puis une fixation au moyen d'organes de fixation mécaniques, du panneau sur la structure, caractérisé en ce qu'on réalise le pré-assemblage par collage à froid.

L'expression "collage à froid" désigne ici, comme dans l'ensemble du texte, tout collage effectué sensiblement à température ambiante, sous une pression relativement faible par comparaison avec la forte pression imposée pour un collage à chaud.

L'utilisation de la technique du collage à froid pour réaliser le pré-assemblage permet d'automatiser en partie cette opération et de l'intégrer dans un atelier flexible. Par rapport à la technique traditionnelle d'épinglage, une telle opération est environ dix fois plus rapide.

Par ailleurs, le collage à froid implique de presser les pièces l'une contre l'autre avec un effort de serrage relativement limité. Il n'existe donc aucun risque de déformation permanente de la structure sur laquelle est fixé le panneau, même lorsque cette structure n'est pas refermée sur elle-même comme dans le cas d'un bord d'attaque de voilure d'aéronef.

Dans un mode de réalisation préféré de l'invention, on effectue le collage à froid en montant la structure sur un châssis rigide, en positionnant le panneau sur la structure, avec interposition de colle, et en pressant le panneau contre la structure.

Dans le cas où la structure sur laquelle on désire fixer le panneau est une ossature ajourée, on presse localement le panneau contre cette ossature, principalement dans des régions non ajourées de celle-ci.

Plus précisément, lorsque l'ossature ajourée comprend des nervures sensiblement en forme de C et des organes formant raidisseurs reliant ces nervures, on presse le panneau contre ces organes, sensiblement sur toute leur longueur et on presse également le panneau contre les nervures en des emplacements localisés, situés entre les organes formant raidisseurs.

Lorsque les nervures ont un rayon de courbure évolutif, présentant une valeur minimale dans une région centrale, on presse également le panneau contre les régions centrales des nervures, sensiblement sur toute la longueur de l'ossature ajourée.

Avantageusement, on presse alors le panneau contre l'ossature ajourée de façon progressive, en appliquant d'abord le panneau contre lesdites régions centrales des nervures puis, de proche en proche, jusqu'à des régions d'extrémité des nervures.

Dans le mode de réalisation préféré de l'invention, on presse le panneau contre la structure ajourée au moyen de joints gonflables montés dans un casque de collage rigide, servant de contreforme.

Avantageusement, on positionne alors initialement le panneau sur le châssis portant l'ossature ajoutée, sans interposer de colle, on amène ensuite le casque en position de collage, pour assurer la préhension du panneau, on écarte de l'ossature le casque portant le panneau, on applique la colle, et on amène à nouveau le casque en position de collage, pour presser le panneau contre l'ossature.

De préférence, on amène le casque en position de collage en guidant le casque sur le châssis portant l'ossature.

Par ailleurs, pour éviter tout déplacement relatif entre le casque et le châssis lors du collage, on bride avantageusement le casque sur le châssis portant l'ossature, avant de presser le panneau contre celle-ci.

Lorsque l'ossature ajourée comprend au moins un rebord en porte-à-faux, on maintient de préférence ce rebord au moyen d'organes de maintien portés par le casque de collage, avant de presser localement le panneau contre l'ossature ajourée.

Dans le cadre d'un atelier flexible, on monte avantageusement la structure sur le châssis rigide à un poste de montage de cette structure, en assemblant des éléments constitutifs de celle-ci sur un gabarit de montage fixé à un bâti. Le gabarit de montage et le bâti forment alors le châssis rigide. Dans ce cas, on amène ensuite le châssis rigide portant la structure à un poste de collage, où le panneau est collé sur la structure.

Le procédé selon l'invention s'applique avantageusement à l'assemblage d'un revêtement formant le panneau souple sur une ossature formant la structure, lors de la fabrication d'un bord d'attaque d'aéronef.

L'invention concerne également une installation de pré-assemblage d'un panneau souple sur une face extérieure d'une structure ajourée, telle que définie dans la revendication 14.

### Brève description des dessins

On décrira à présent, à titre d'exemple non limitatif, un mode de réalisation préféré de l'invention, en se référant aux dessins annexés, dans lesquels :
- la figure 1 est une vue en coupe transversale d'un bord d'attaque de voilure d'aéronef susceptible d'être fabriqué en mettant en oeuvre le procédé d'assemblage selon l'invention ;
- la figure 2 est une vue d'ensemble, en perspective illustrant une partie du châssis rigide sur lequel est assemblée l'ossature ajourée du bord d'attaque de la figure 1, préalablement à la fixation du panneau souple sur cette structure ;
- la figure 3 est une vue en perspective, à plus grande échelle, illustrant une autre partie du châssis rigide ainsi que le principe de positionnement du-panneau sur l'ossature portée par ce châssis ;
- la figure 4 est une vue d'ensemble, en perspective, illustrant la mise en place d'un casque de collage sur les pièces à assembler portées par le châssis ;
- la figure 5 est une vue en perspective montrant le casque de collage bridé sur le châssis, pour réaliser le collage ;
- la figure 6 est une vue en coupe du casque de collage, montrant notamment les joints gonflables qui l'équipent ;
- la figure 7 est une vue en coupe du casque de collage, montrant notamment les organes d'appui escamotables qui l'équipent ;
- la figure 8 est une vue en perspective représentant l'une des plaques d'extrémité du casque de collage, ainsi que les moyens de guidage et les moyens de préhension du panneau portés par cette plaque ; et
- la figure 9 est une vue en coupe partielle illustrant notamment les moyens de pincement du panneau qui équipent le casque de collage.

### Description détaillée d'un mode de réalisation préféré de l'invention

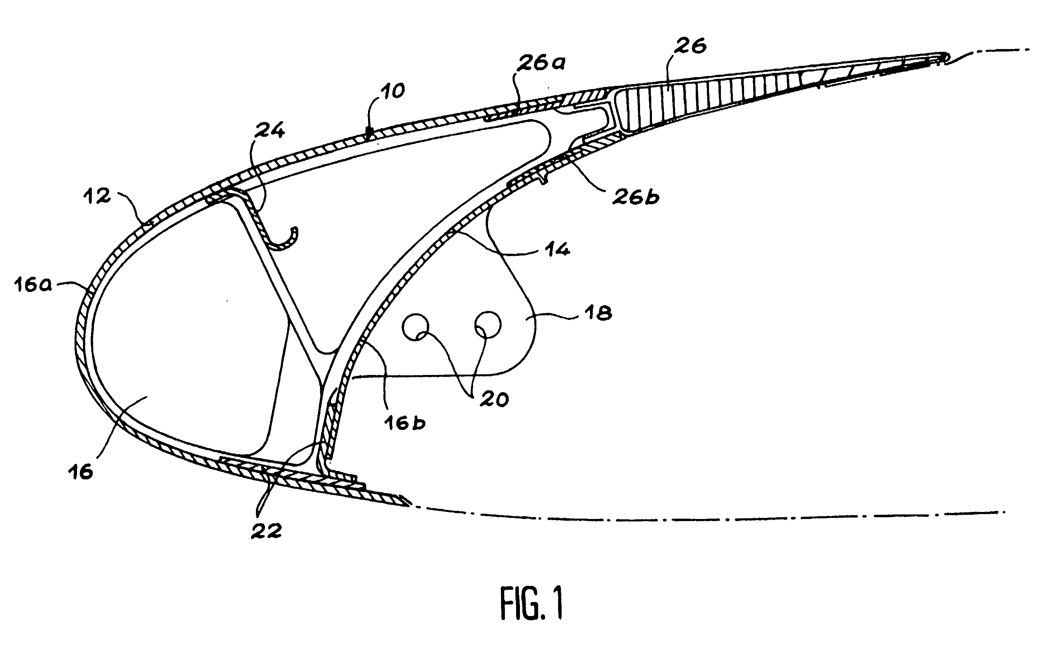

Sur la figure 1, on a représenté en coupe un bord d'attaque de voilure d'aéronef susceptible d'être fabriqué par le procédé et l'installation conformes à l'invention. Comme on l'a déjà indiqué, l'invention est particulièrement adaptée à la fabrication d'un tel sous-ensemble. Elle peut toutefois être mise en oeuvre dans de nombreux autres cas, par exemple pour assembler une cornière sur une paroi, pour fixer une lisse sur un revêtement, pour relier un gousset ou un montant de reprise sur une nervure et, d'une manière plus générale, pour fixer tout panneau souple sur une structure plus élaborée, élastiquement déformable et présentant une plus grande rigidité que le panneau, notamment pour fabriquer un élément de fuselage ou de voilure.

Le bord d'attaque illustré à titre d'exemple sur la figure 1 comprend une ossature ajourée 10, un revêtement supérieur ou extérieur 12 et un revêtement inférieur ou intérieur 14.

La structure ajourée 10 comporte un certain nombre de nervures 16 de section transversale en forme de C ou de H. Les nervures 16 sont des pièces généralement métalliques, réalisées par exemple par usinage, emboutissage, etc.. Chacune d'entre elles présente une surface extérieure 16a et une surface intérieure 16b, sur lesquelles sont fixées, respectivement, les revêtements supérieur 12 et inférieur 14. Certaines nervures 16 sont également équipées, sur leur surface intérieure 16b, d'une chape 18 traversée par deux trous 20 servant à relier le bord d'attaque au reste de la voilure. Les nervures 16 sont disposées généralement de façon parallèle les unes aux autres.

L'ossature ajourée 10 comprend également deux raidisseurs 22 et 24 ainsi qu'un bord de fuite 26, qui fait aussi office de raidisseur. Les raidisseurs 22 et 24 ainsi que le bord de fuite 26 relient entre elle les nervures 16, selon une direction longitudinale sensiblement perpendiculaire aux plans des nervures.

Le raidisseur 22, appelé raidisseur inférieur, est placé à la jonction d'intrados entre les surfaces extérieures 16a et intérieures 16b des nervures 16. Le bord de fuite 26 relie les surfaces extérieures 16a et intérieures 16b des nervures 16 à leur jonction d'extrados. Enfin, le raidisseur 24, appelé raidisseur supérieur, relie les surfaces extérieures 16a des nervures 16 dans une région d'extrados intermédiaire entre le bord de fuite 26 et l'avant du bord d'attaque.

Comme l'illustre la figure 1, le revêtement supérieur 12 est fixé sur l'ossature ajourée 10 le long des surfaces extérieures 16a des nervures 16, et le long des raidisseurs 22 et 24 et d'une partie d'extrados avant 26a du bord de fuite 26.

Par ailleurs, le revêtement inférieur 14 est fixé sur les surfaces intérieures 16b de chacune des nervures 16, sur le raidisseur inférieur 22 et sur une partie d'intrados avant 26b du bord de fuite 26. Cette fixation est telle que les chapes 18 font saillie au-delà du revêtement inférieur 14.

L'installation qui va à présent être décrite concerne essentiellement la fixation du revêtement supérieur 12 sur l'ossature ajourée 10.

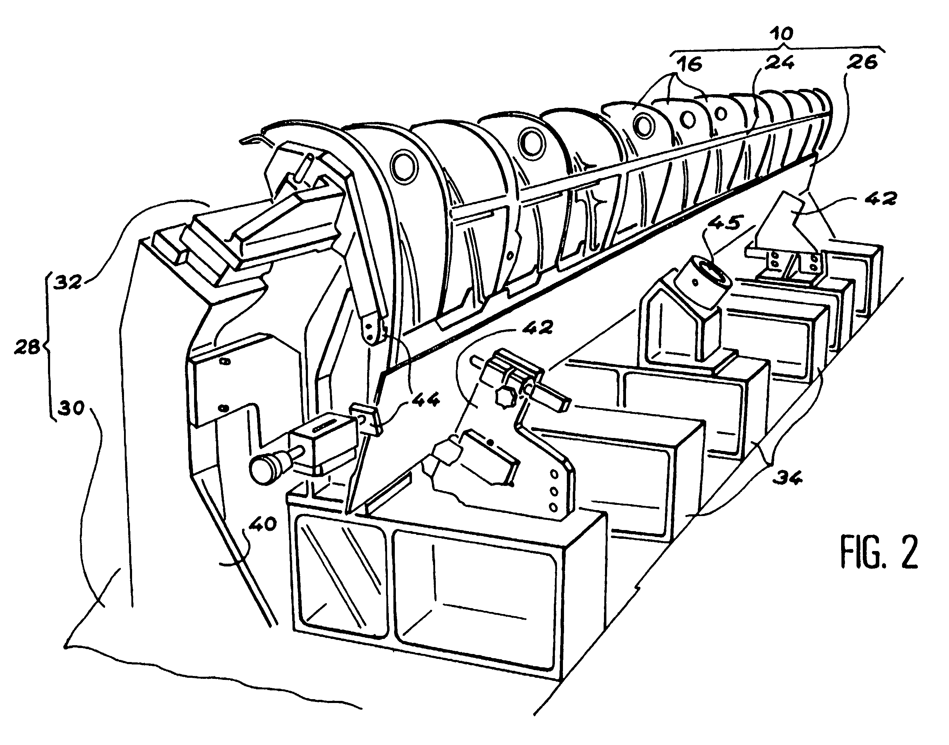

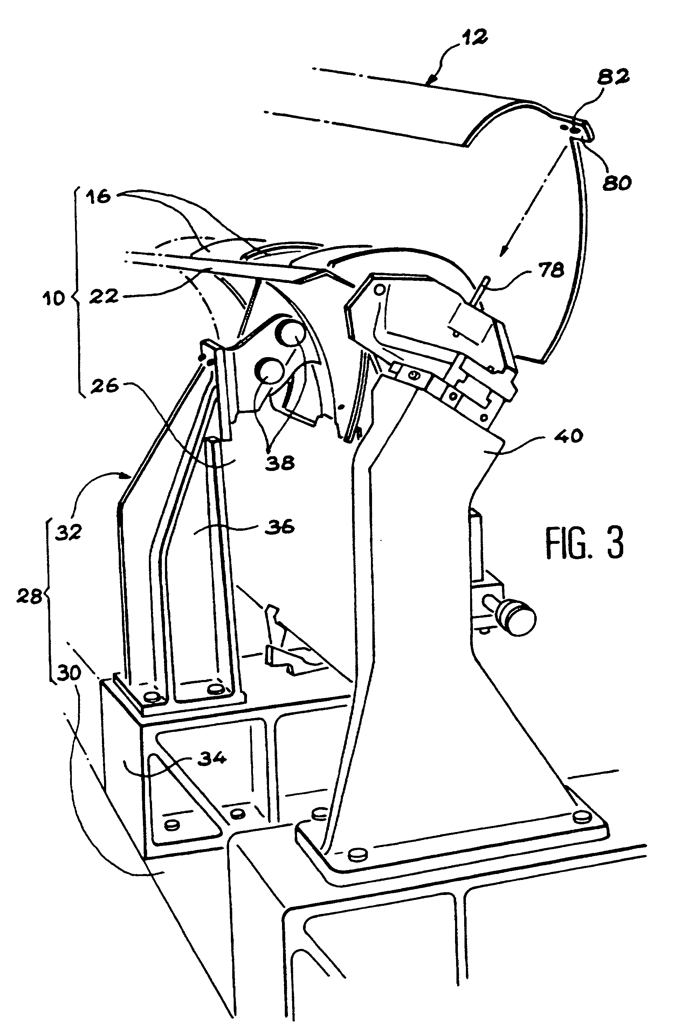

Sur les figures 2 et 3, la référence 28 désigne de façon générale le châssis rigide servant à la fois à la fabrication de l'ossature 10 et à la fixation du revêtement supérieur 12 sur l'ossature.

A cet effet, le châssis rigide 28 comprend un bâti 30, apte à être transféré entre un poste de montage de l'ossature ajourée 10 et un poste de collage, où le revêtement supérieur 12 est collé sur l'ossature ajourée 10, lors d'une étape de pré-assemblage propre au procédé selon l'invention. Le bâti 30, qui se présente sous la forme d'une poutre rigide, supporte la structure ajourée 10 par l'intermédiaire d'un gabarit de montage 32. Ce gabarit 32 forme, avec le bâti 30, le châssis rigide 28.

Sur sa face supérieure, le bâti 30 porte des platines d'ancrage 34, sur lesquelles sont fixés les différents éléments formant le gabarit de montage 32. Ces éléments comprennent notamment des consoles 36, supportant individuellement les nervures 16 équipées de chapes 18, par l'intermédiaire de deux broches 38 traversant les trous 20 formés dans la chape.

Les deux platines d'ancrage 34 situées aux extrémités du bâti 30 supportent deux consoles d'extrémité 40 situées au-delà des extrémités de l'ossature ajourée 10. Plus précisément, ces consoles d'extrémité 40 supportent des butées 44, de préférence réglables, servant notamment à positionner avec précision l'ossature 10 sur le châssis 28.

Comme l'illustre en particulier la figure 2, certaines des platines d'ancrage 34 supportent également des butées réglables 42, contre lesquelles vient en appui le bord de fuite 26. Les bords d'extrémité du bord de fuite 26 viennent également en appui contre l'une des butées réglables 44 portées par chacune des consoles d'extrémité 40.

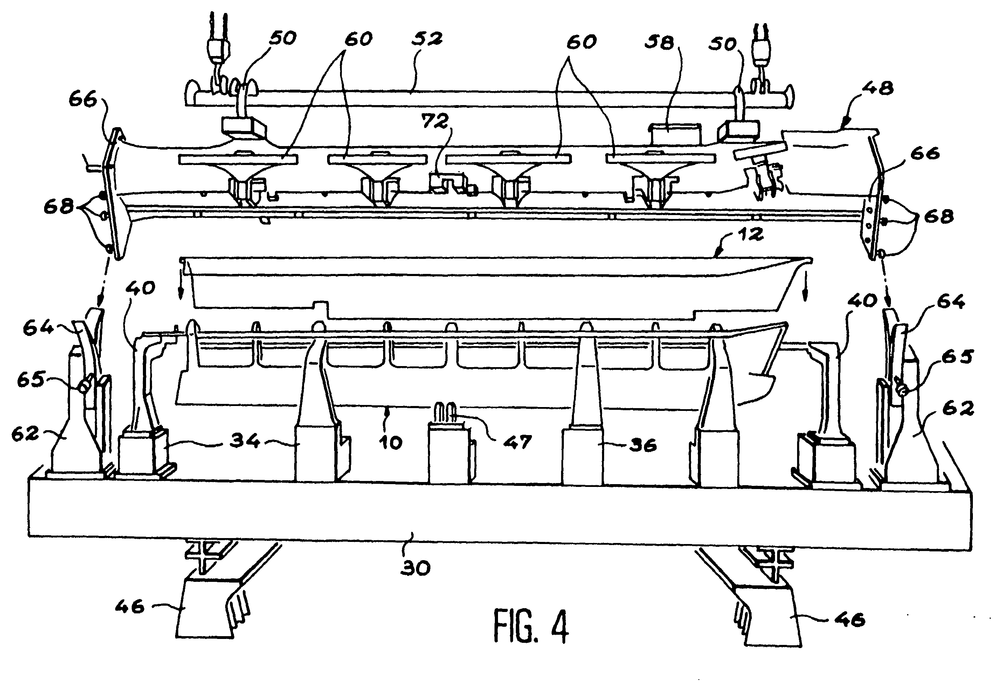

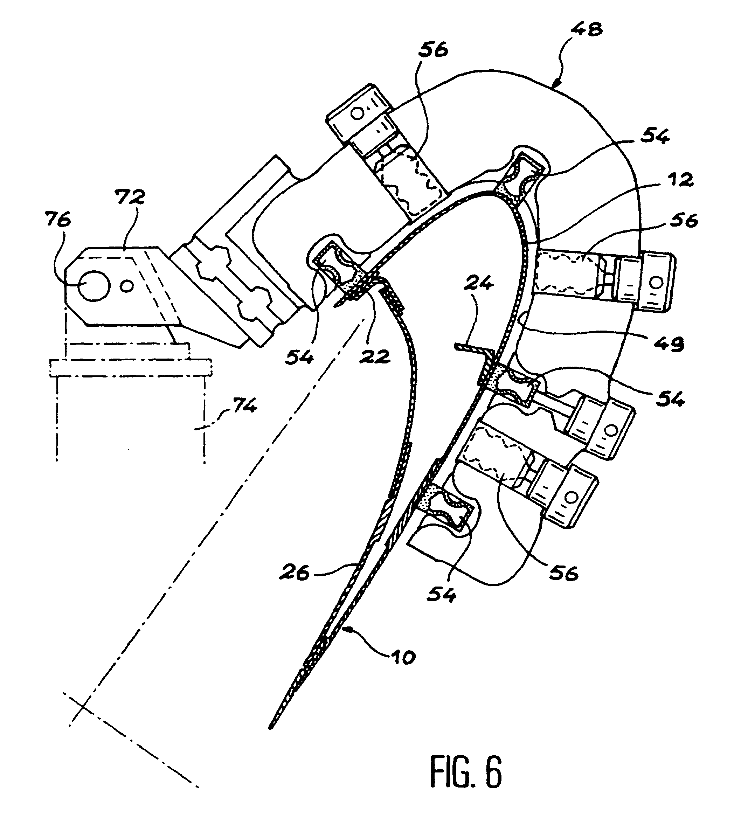

En outre, une ou deux des platines d'ancrage 34, situées entre les consoles d'extrémité 40, sont équipées d'un réceptacle 45 (figure 2) de sphère de centrage, du côté de l'ossature 10 portant le bord de fuite 26 et vers l'extérieur par rapport à celui-ci. La fonction de ce réceptacle 45 apparaîtra ultérieurement. La même platine d'ancrage 34 supporte, de l'autre côté de l'ossature ajourée 10, une chape d'ancrage 47 (figure 4) pour un pied de bridage 74 (figure 6) dont la fonction sera décrite ultérieurement.

Lorsque le châssis rigide 28 se trouve au poste de montage, l'ossature ajourée 10 est assemblée en fixant les nervures 16 sur les consoles 36, en plaçant le bord de fuite 26 contre les butées 42 et 44 et en montant les raidisseurs 22 et 24 aux emplacements qu'ils sont destinés à occuper dans l'ossature. La fixation des différentes pièces ne fait pas partie de l'invention. Elle est assurée par des moyens classiques, c'est-à-dire notamment à l'aide d'organes de fixation traversants tels que des rivets. Tout autre mode de fixation peut toutefois être envisagé, sans sortir du cadre de l'invention.

Lorsque le montage de l'ossature ajourée 10 est terminé, le châssis rigide 28 portant cette ossature est transporté du poste de montage jusqu'à un poste de collage, par des moyens de transport adaptés tels qu'une unité mobile filoguidée. Tout autre moyen de transport (pont roulant ou autre) peut toutefois être utilisé, sans sortir du cadre de l'invention.

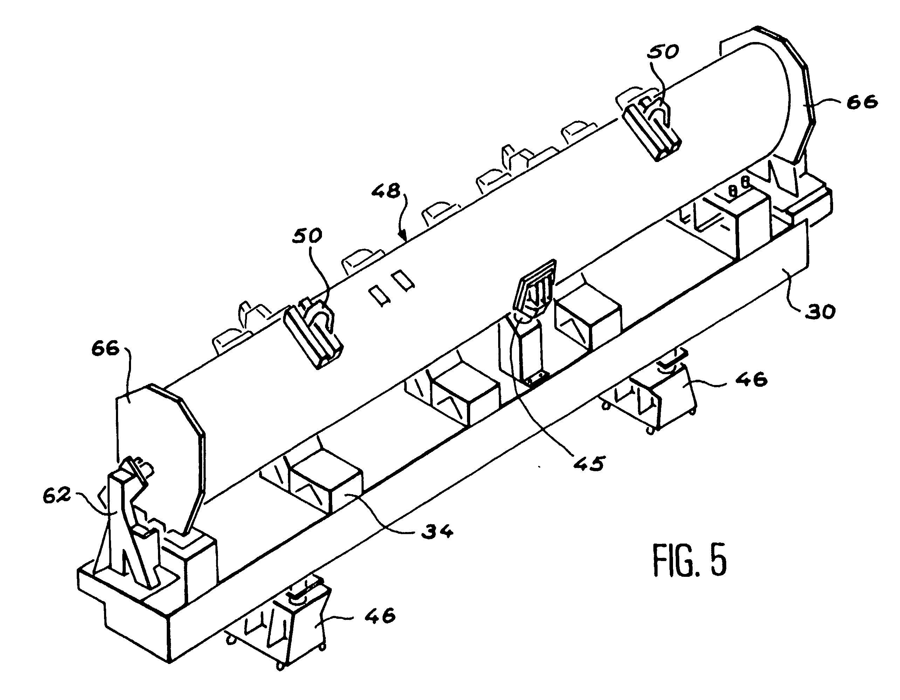

Lorsque le châssis rigide portant l'ossature ajourée 10 arrive au poste de collage, le bâti 30 est déposé sur deux pieds de centrage 46 (figures 4 et 5) posés à même le sol. Ces pieds 46 sont disposés symétriquement de part et d'autre d'un plan médian perpendiculaire au bâti 30, afin de définir un appui isostatique, facile à régler en hauteur. Ils sont équipés de moyens (non représentés) permettant de brider le bâti 30 en position horizontale. Ils définissent ainsi une référence fixe pour le châssis rigide 28 au poste de collage.

Comme l'illustre également la figure 4, l'installation conforme à l'invention comprend de plus un casque de collage rigide, désigné de façon générale par la référence 48. Ce casque 48 est équipé de moyens tels que des crochets 50, assurant son déplacement entre une position active permettant le collage et une position inactive, permettant le déplacement du châssis rigide 28 et le stockage du casque. Dans le mode de réalisation représenté à titre d'exemple, les déplacements du casque peuvent notamment être assurés au moyen d'un portique (non représenté) auquel est suspendue une barre horizontale 52 portant les crochets 50.

Il est à noter que des casques de collage 48 de formes et/ou de dimensions différentes peuvent avantageusement être prévus, lorsque l'installation équipe un atelier flexible destiné à fabriquer des bords d'attaque de différents types.

Le casque 48 présente intérieurement un évidement 49 (figure 6) dont la forme est sensiblement complémentaire de la forme extérieure du revêtement 12 que l'on désire fixer sur l'ossature ajourée 10. Plus précisément, il existe entre le revêtement 12 et l'évidement 49 un jeu limité et sensiblement uniforme, lorsque le casque coiffe les pièces à assembler.

La fonction essentielle du casque de collage 48 étant de presser le revêtement 12 contre l'ossature ajourée 10 avec une force suffisante pour assurer le collage à froid de ces deux pièces, sans entraîner pour autant de déformation permanente de l'ossature 10, il est équipé intérieurement de joints gonflables ou déformables, comme l'illustre la figure 6.

Dans le mode de réalisation préféré représenté, les joints gonflables équipant le casque de collage 48 comprennent quatre joints linéaires ou longitudinaux 54, ainsi qu'une pluralité de joints locaux, dits "champignons" 56.

Deux des joints linéaires 54 sont situés au-dessus des raidisseurs 22 et 24. Un troisième joint linéaire 54 est situé au-dessus de la partie d'extrados avant 26a du bord de fuite 26. Enfin, le quatrième joint linéaire 54 est situé au-dessus de l'extrémité avant des nervures 16, c'est-à-dire dans une partie sensiblement centrale de celles-ci, interposée entre les raidisseurs 22 et 24, et présentant le plus petit rayon de courbure.

Les joints gonflables ponctuels 56 sont placés en face des nervures 16, de façon à presser le revêtement 12 contre les surfaces extérieures 16a de celles-ci entre les joints gonflables linéaires 54, c'est-à-dire entre les raidisseurs.

Les joints gonflables 54 et 56 qui équipent le casque de collage 48 sont reliés à un boîtier de distribution pneumatique 58 par des lignes d'alimentation pneumatique distinctes (non représentées). Le boîtier de distribution 58 peut notamment être monté sur le casque de collage 48, comme on l'a représenté sur la figure 4.

Le circuit d'alimentation pneumatique comprenant le boîtier de distribution 58 et les lignes d'alimentation pneumatique permet d'assurer la mise en pression des joints gonflables 54 et 56 de façon séquentielle ou progressive. En d'autres termes, lorsque le circuit est actionné, les joints gonflables 54 et 56 ne sont pas mis en pression simultanément, mais progressivement.

De façon plus précise, dans le mode de réalisation décrit à titre d'exemple en référence à la figure 6, la mise en pression complète du revêtement supérieur 12 s'effectue progressivement, en cinq étapes successives :
- lors d'une première étape, le joint linéaire 54 situé en face de l'extrémité avant, de plus petit rayon de courbure, du bord d'attaque 10, est pressurisé ;
- lors d'une deuxième étape, les joints ponctuels 56 situés entre le joint linéaire 54 déjà pressurisé et les joints linéaires 54 placés le long des raidisseurs 22 et 24 sont à leur tour mis en pression ;
- à l'étape suivante, on pressurise les deux joints linéaires 54 situés en face des raidisseurs 22 et 24 ;
- la quatrième étape se traduit par la mise en pression des joints ponctuels 56 interposés entre les joints linéaires 54 situés en face du raidisseur supérieur 24 et de la partie d'extrados avant 26a du bord de fuite ;
- enfin, le joint linéaire 54 situé en face de la partie d'extrados avant 26a du bord de fuite 26 est à son tour mis sous pression.

Lorsque cette mise en pression progressive est terminée, tous les joints gonflables 54 et 56 sont maintenus en pression pendant un temps suffisant pour permettre le collage du revêtement supérieur 12 sur l'ossature ajourée 10.

Le corps du casque 48 présente une structure rigide sur laquelle prennent appui chacun des joints gonflables 54 et 56. Lorsqu'ils sont mis en pression, ces joints se déforment donc vers l'intérieur de l'évidement 49, de façon à presser le revêtement supérieur 12 contre l'ossature 10. La force ainsi engendrée est suffisante pour assurer le collage à froid de ces deux pièces, après interposition d'une couche de colle. Cette force est toutefois insuffisante pour engendrer des déformations permanentes dans les pièces.

La colle utilisée peut être constituée par toute colle apte à assurer le collage à froid des deux pièces, sous une faible pression.

A titre d'illustration non limitative, la colle peut être un mastic à base de polymère liquide et de polythioéther. C'est un mastic inhibiteur de corrosion, qui assure à la fois l'étanchéité et le collage. Sa viscosité permet de l'appliquer au rouleau. Il polymérise rapidement à température ambiante et reste disponible environ 15 min avant la mise sous pression. Ce mastic est particulièrement adapté au procédé puisqu'il permet, en une seule opération, l'accostage rapide du revêtement sur toutes les pièces de l'ossature, suivi immédiatement d'une mise en pression ordonnée et généralisée.

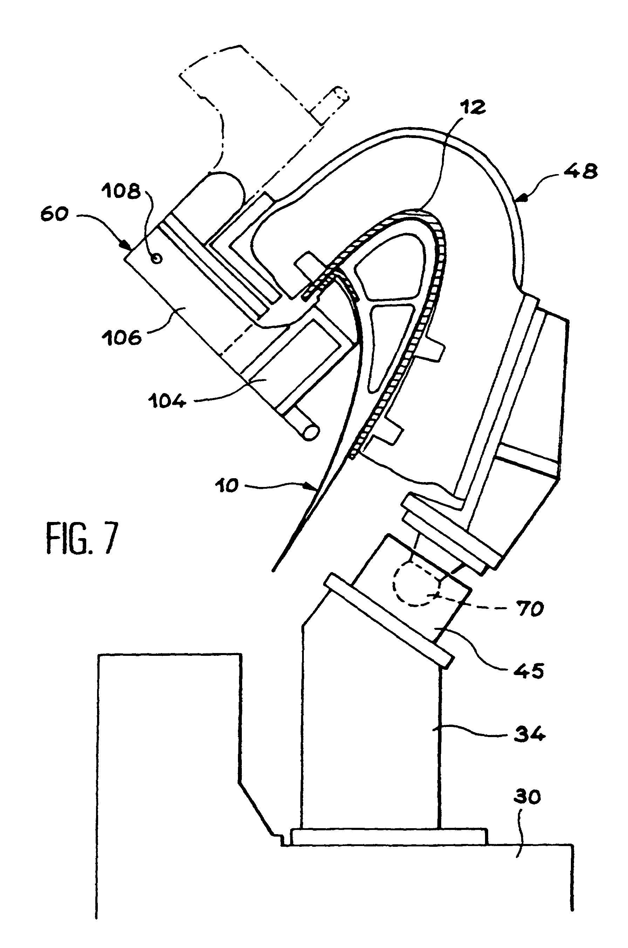

Dans le mode de réalisation illustré sur les figures, la partie de l'ossature 10 attenante au raidisseur inférieur 22 est sensiblement moins rigide que le reste de l'ossature. L'application de la pression dans les joints gonflables 54 et 56 les plus proches risquerait donc d'induire une déformation permanente dans cette zone si aucune précaution n'était prise. C'est pourquoi on prévoit avantageusement d'équiper le casque de collage d'organes d'appui escamotables 60, illustrés sur les figures 4 et 7.

Dans la pratique, ces organes d'appui escamotables 60 comprennent des réglettes rigides 104 portées par des leviers 106. Les leviers 106 sont articulés, par des axes 108, sur le bord longitudinal du casque 48 le plus proche du raidisseur inférieur 22, lorsque le casque est amené en position active.

La figure 4 illustre les organes d'appui 60 dans leur état escamoté. Les leviers portant les réglettes rigides 104 sont alors pivotés à l'extérieur du casque 48, de façon à dégager complètement l'évidement 49 dans lequel doit venir se placer l'ossature 10 portant le revêtement supérieur 12.

Lorsque le casque 48 a été amené dans sa position active de collage, on fait pivoter les leviers 106 portant les réglettes rigides 104, de telle sorte que celles-ci viennent se placer derrière le raidisseur inférieur 22 (figure 7). Les réglettes 104 forment alors pour ce dernier une surface d'appui rigide, qui s'oppose à toute déformation permanente de la structure ajourée 10 dans cette zone en porte-à-faux, lorsque les joints gonflables 54 et 56 sont mis sous pression.

Pour que l'opération de collage à froid s'effectue dans les meilleures conditions possibles, il est souhaitable que le casque de collage 48 soit parfaitement positionné par rapport au châssis rigide 28.

Pour permettre le positionnement du casque 48, on monte sur le bâti 30 deux consoles de guidage 62 (figure 4), lorsque le châssis 28 portant les pièces 10 et 12 à assembler est parvenu au poste de collage. Plus précisément, les consoles de guidage 62 sont montées sur la poutre formant le bâti 30 au-delà des consoles d'extrémité 40. Chacune des consoles de guidage 62 est équipée d'une glissière inclinée 64 dont l'extrémité basse est fermée et dont l'extrémité haute ouverte s'évase progressivement.

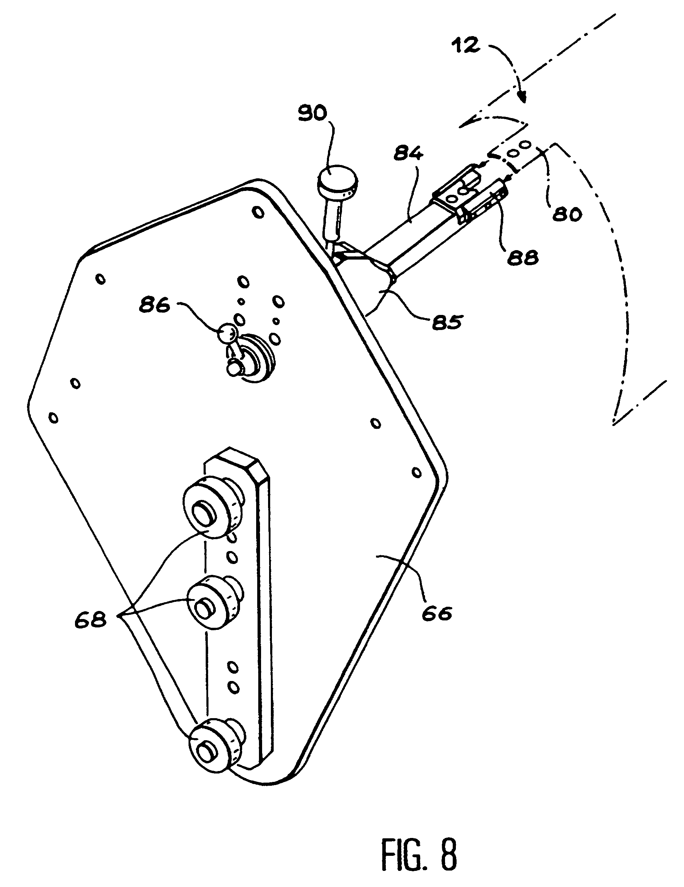

Les deux glissières 64 forment des moyens de guidage aptes à coopérer avec des moyens de guidage complémentaires portés par le casque de collage 48. Ces moyens de guidage complémentaires sont montés sur des plaques verticales 66, fermant le casque 48 à chacune de ses extrémités longitudinales. Dans le mode de réalisation illustré notamment sur les figures 4 et 8, les moyens de guidage complémentaires portés par le casque 48 sont matérialisés par trois galets alignés 68, montés sur la face extérieure de chacune des plaques 66.

Lorsque le casque 48 est suspendu par ses crochets 50, les deux rangées de galets alignés 68 sont disposées sensiblement verticalement. La descente du casque 48 vers les pièces 10 et 12 à coller se traduit par l'entrée successive de chacun des galets 68 dans les glissières de guidage 64. Cette entrée est facilitée par le caractère évasé de l'extrémité supérieure ouverte des glissières. Au fur et à mesure que les galets 68 entrent dans les glissières 64, le casque de collage 48 s'incline pour prendre l'orientation définie par les glissières 64, comme l'illustrent les figures 5 et 6. Le casque est alors parfaitement positionné et orienté par rapport aux pièces à assembler, qu'il coiffe comme l'illustre la figure 6.

Lors du collage, les extrémités du casque 48 sont bridées sur les glissières de guidage 64 au moyen de manettes de bridage 65 (figure 4) équipant les glissières.

Compte tenu de la longueur du casque de collage 48 et afin d'éviter tout fléchissement de celui-ci entre ses extrémités, on adjoint aux moyens de guidage constitués par les glissières 64 et les galets 68 un ou plusieurs points d'appui et de bridage intermédiaires.

Ces points d'appui comprennent une ou deux sphères 70 (figure 7), montées sur le bord du casque de collage 48 situé du côté du bord de fuite 26 de l'ossature 10. La ou les sphères 70 viennent automatiquement se placer dans le ou les réceptacles 45 (figure 2) prévus à cet effet sur le châssis rigide 28. Cet agencement affine le positionnement longitudinal du casque par rapport au châssis et permet, comme on l'a vu, d'éviter tout fléchissement du casque entre ses extrémités. Des moyens de bridage (non représentés) sont, de préférence, prévus sur les réceptacles 45 afin de les bloquer sur les sphères 70, lors du collage.

Sur son bord opposé à celui qui porte la ou les sphères 70, le casque de collage 48 est équipé d'une ou deux chapes 72 (figure 6). Chaque chape 72 permet de relier de façon rigide le casque 48 à la chape 47 correspondante (figure 4) prévue sur le châssis 28 lorsque le casque coiffe les pièces à assembler. Cette liaison est assurée par des moyens de bridage constitués par un ou deux pieds d'ancrage 74 dont l'un est illustré partiellement sur la figure 6. L'extrémité haute de chaque pied d'ancrage 74 est reliée rigidement à une chape 72 par une broche 76 à son extrémité supérieure. De façon comparable, l'extrémité basse de chaque pied 74 est reliée rigidement à une chape 47 (figure 4) fixée sur le châssis 28, au moyen d'une broche ou de tout organe de bridage équivalent.

Pour que le collage à froid du revêtement supérieur 12 sur l'ossature ajourée 10 soit satisfaisant, ces deux pièces doivent être parfaitement positionnées l'une par rapport à l'autre. Cela conduit à équiper le châssis rigide 28 de moyens de positionnement du revêtement 12 et à doter le casque 48 de moyens de préhension de ce revêtement, afin de garantir le respect de ce positionnement lorsque la colle a été appliquée sur les pièces.

Pour réaliser le positionnement du revêtement supérieur 12 sur le châssis rigide 28, on équipe chacune des deux consoles d'extrémité 40 d'un doigt de positionnement 78 (figure 3) et on prévoit une languette 80 percée d'un trou 82 à chaque extrémité longitudinale du revêtement 12. Plus précisément, les doigts 78 font saillie au-delà de l'enveloppe extérieure de l'ossature ajourée 10, de façon à pénétrer dans les trous 82, pratiquement sans jeu, lorsque le revêtement 12 est parfaitement positionné sur l'ossature 10. Les languettes 80 seront supprimées lors d'une étape ultérieure de la fabrication du bord d'attaque.

Comme l'illustre la figure 8, les moyens de préhension équipant le casque de collage 48 comprennent deux tiroirs 84, montés coulissants dans des blocs supports 85 fixés sur la face interne de chacune des plaques d'extrémité 66. Les tiroirs 84 sont aptes à se déplacer parallèlement à l'axe longitudinal du casque lorsqu'un opérateur actionne une manette 86 placée à l'extérieur de la plaque 66. A son extrémité tournée vers l'intérieur du casque, chacun des tiroirs 84 porte un guide-languette 88, dans lequel peut venir se loger la languette 80 correspondante du revêtement supérieur 12. Un loquet 90 permet de bloquer chaque tiroir 84 dans sa position de préhension.

Lorsque le casque 48 est en position haute inactive, les tiroirs 84 sont escamotés, c'est-à-dire rétractés dans les blocs supports 85. Lorsque le casque 48 est amené au-dessus des pièces 10 et 12 de façon à les coiffer comme l'illustre la figure 6, chacun des guide-languettes 88 se trouve alors dans le prolongement des languettes 80 formées sur le revêtement supérieur 12. Pour assurer la préhension de celui-ci, on manoeuvre alors les tiroirs 86, de façon à engager chaque guide-languette 88 sur la languette 80 correspondante. Après verrouillage dans cette position par actionnement du loquet 90, la remontée du casque 48 se traduit alors par l'enlèvement du revêtement supérieur 12. Celui-ci occupe alors une position parfaitement déterminée à l'intérieur du casque 48, puisque ce dernier ainsi que le revêtement 12 étaient l'un et l'autre parfaitement positionnés par rapport au châssis 28 lors de la préhension.

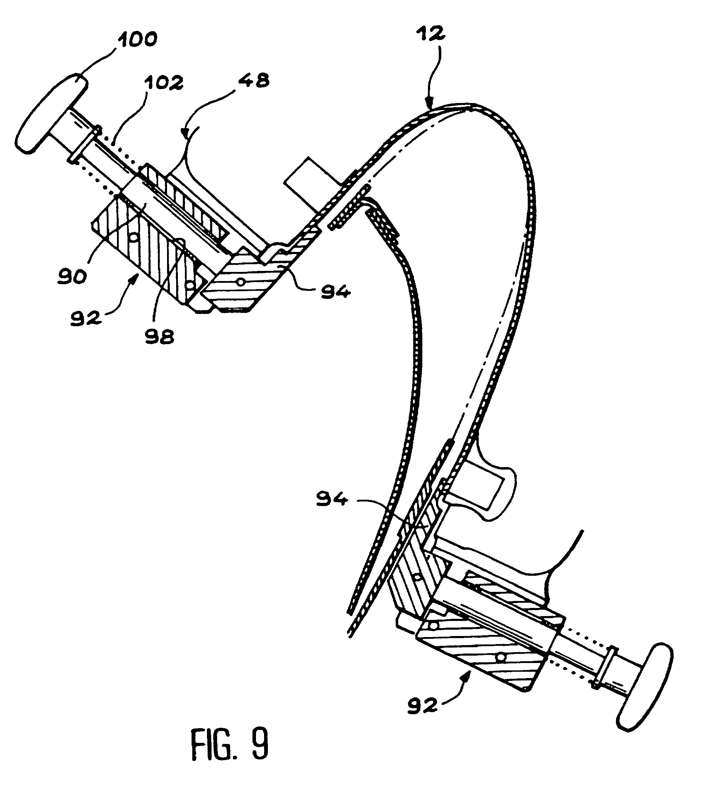

Comme on l'a illustré sur la figure 9, le casque de collage 48 est avantageusement équipé de moyens de pincement 92 le long de ses bords longitudinaux. Ces moyens de pincement 92 ont pour fonction de maintenir les bords longitudinaux du revêtement supérieur 12 en appui contre la surface intérieure du casque 48 lorsque le revêtement est monté dans le casque à l'aide des moyens de préhension décrits précédemment. Plus précisément, les moyens de pincement 92 permettent de présenter le revêtement 12 sur l'ossature ajourée 10 dans les meilleures conditions possibles lorsque la colle a été appliquée sur cette structure.

Dans le mode de réalisation illustré à titre d'exemple sur la figure 9, les moyens de pincement 92 comprennent un certain nombre de pinces d'appui 94 fixées aux extrémités de tiges 96 aptes à coulisser et à tourner dans des alésages 98 traversant des supports liés au casque. A son extrémité opposée à la pince 94, chacune des tiges 96 porte un bouton d'actionnement 100. En outre, un ressort de compression 102 est interposé entre le bouton 100 et la face extérieure en vis-à-vis du support lié au casque 48.

Dans une position de repos (non représentée) les pinces 94 sont pivotées vers l'extérieur de l'évidement 49 prévue dans le casque 48 pour recevoir les pièces à assembler. Lorsque le casque 48 coiffe les pièces, afin notamment d'assurer la préhension du revêtement supérieur 12, un opérateur presse les boutons 100 et les fait tourner de 180°, de façon à amener les pinces 94 en face des rebords longitudinaux du revêtement 12. Dès qu'un bouton 100 est relâché, le ressort 102 amène la pince 94 dans la position illustrée sur la figure 8, dans laquelle le rebord du revêtement est pincé contre la surface intérieure du casque 48.

La mise en oeuvre de l'installation qui vient d'être décrite va à présent être expliquée.

Dans un premier temps, le châssis 28 portant l'ossature ajourée 10 est amené au poste de collage. Les consoles de guidage 62 sont alors montées sur le châssis 30 comme l'illustrent notamment les figures 4 et 5. Des opérateurs mettent ensuite en place le revêtement supérieur 12 sur l'ossature 10, sans interposition de colle. Comme on l'a expliqué, la mise en place est assurée lorsque chacun des trous 82 est placé sur le doigt 78 prévu à cet effet (figure 3).

Le casque de collage 48 adapté à l'ossature ajourée 10 montée sur le châssis 28 est alors amené au-dessus de celui-ci et descendu progressivement jusqu'à ce que les galets 68 aient totalement pénétré dans les glissières de guidage 64. Un contrôle est alors effectué en verrouillant le casque 48 sur le châssis 28 à l'aide des manettes de bridage 65 et du ou des pieds d'ancrage 74 reliant les chapes 72 et 47, puis en mettant l'installation en pression, sans colle, afin de vérifier les accostages du revêtement sur l'ossature. La pression est ensuite relâchée et le casque déverrouillé. Les opérateurs actionnent alors les deux manettes 86 afin d'assurer la préhension du revêtement 12 par le casque. Ils verrouillent les tiroirs 84 en position à l'aide des loquets 90.

Le casque 48 est ensuite remonté et la colle est mise en place sur les surfaces de l'ossature 10 appelées à venir en contact avec le revêtement supérieur 12. Préalablement, ces surfaces sont nettoyées et des bandes de protection sont placées sur les surfaces à ne pas coller.

Lorsque l'encollage est terminé, le casque 48 est à nouveau descendu. Auparavant, les bords longitudinaux du revêtement 12 sont écarté par la mise en oeuvre des moyens de pincement 92, comme l'illustre la figure 9.

Lorsque le casque 48 coiffe l'ossature ajourée 10, le ou les pieds de bridage 74 sont mis en place (figure 6), la ou les sphères 70 (figure 7) sont bridées et les manettes de bridage 65 (figure 4) sont actionnées. Les moyens de pincement 92 sont ensuite relâchés. L'opération de collage à froid proprement dite est alors mise en oeuvre par le gonflement progressif des joints gonflables 54 et 56, dans l'ordre exposé précédemment. La pression maximale appliquée sur les pièces est d'environ 2 bars.

Lorsque le temps nécessaire à la polymérisation à froid du mastic de collage est terminé (par exemple, environ 2 heures), 'les joints gonflables 54 et 56 sont dégonflés et les différents organes de bridage sont libérés.

Le casque 48 est alors à nouveau soulevé, pour dégager le châssis 28 portant les pièces 10 et 12 qui sont alors pré-assemblées.

Le châssis 28 est ensuite amené au poste suivant, où le revêtement 12 est définitivement fixé sur la structure ajourée 10. Cette fixation est effectuée en perçant directement les pièces au diamètre exigé par les moyens de fixation mécaniques utilisés. Ces moyens de fixation, qui peuvent être constitués par tout moyen de fixation approprié tel que des rivets, boulons, etc., sont alors mis en place.

Par rapport aux techniques traditionnelles de pré-assemblage par épinglage, l'invention permet de diminuer environ par dix le temps nécessaire à cette opération.

Bien entendu et comme on l'a déjà indiqué, l'invention n'est pas limitée à la fabrication d'un bord d'attaque d'aéronef mais s'applique de façon plus générale à tout assemblage d'un panneau souple sur une structure élastiquement déformable mais présentant une plus grande rigidité que le panneau.

Par ailleurs, de nombreuses modifications peuvent être apportées à l'installation décrite, sans sortir du cadre de l'invention. Ainsi, le nombre et la répartition des joints linéaires et ponctuels équipant le casque dépendent du type de pièces dont l'assemblage est réalisé. Les joints linéaires sont placés en face des zones les plus résistantes de l'ossature. Les joints ponctuels, généralement disposé en ligne parallèlement aux joints linéaires, peuvent inclure, selon le cas, une ou plusieurs lignes entre deux joints linéaires consécutifs. A l'inverse, deux joints linéaires peuvent aussi être placés côte à côte, sans interposition de joints ponctuels.

## Revendications

1. Procédé d'assemblage d'un panneau souple (12) sur une structure ouverte (10) élastiquement déformable et présentant une plus grande rigidité que le panneau, selon lequel on réalise successivement un pré-assemblage, puis une fixation au moyen d'organes de fixation mécaniques, du panneau (12) sur la structure (10), procédé **caractérisé en ce qu'**on réalise le pré-assemblage par collage à froid.

2. Procédé selon la revendication 1, dans lequel on effectue le collage à froid en montant la structure (10) sur un châssis rigide (28), en positionnant le panneau (12) sur la structure (10), avec interposition de colle, et en pressant le panneau (12) contre la structure (10).

3. Procédé selon la revendication 2, appliqué à une structure en forme d'ossature ajourée (10), dans lequel on presse localement le panneau (12) contre l'ossature (10), principalement dans des régions non ajourées de celle-ci.

4. Procédé selon la revendication 3, appliqué à une ossature ajourée (10) comprenant des nervures (16) sensiblement en forme de C et des organes (22,24,26) formant raidisseurs reliant les nervures (16), dans lequel on presse le panneau (12) contre lesdits organes (22,24,26), sensiblement sur toute leur longueur, et on presse le panneau (12) contre les nervures (16) en des emplacements localisés, situés entre les organes (22,24,26) formant raidisseurs.

5. Procédé selon la revendication 4, appliqué à une ossature ajourée (10) dont les nervures (16) ont un rayon de courbure évolutif, présentant une valeur minimale dans une région centrale, dans lequel on presse également le panneau (12) contre lesdites régions centrales des nervures (16), sensiblement sur toute la longueur de l'ossature ajourée (10).

6. Procédé selon la revendication 5, dans lequel on presse le panneau (12) contre l'ossature ajourée (10) de façon progressive, en appliquant d'abord le panneau contre lesdites régions centrales des nervures (16) puis, de proche en proche, jusqu'à des régions d'extrémité des nervures (16).

7. Procédé selon l'une quelconque des revendications 3 à 6, dans lequel on presse le panneau (12) contre l'ossature ajourée (10) au moyen de joints gonflables (54,56) montés dans un casque de collage (48) rigide.

8. Procédé selon la revendication 7, dans lequel on positionne initialement le panneau (12) sur le châssis (28) portant l'ossature ajourée (10), sans interposer de colle, on amène ensuite le casque (48) en position de collage, pour assurer la préhension du panneau (12), on écarte de l'ossature (10) le casque (48) portant le panneau (12), on applique la colle, et on amène à nouveau le casque (48) en position de collage, pour presser le panneau (12) contre l'ossature (10).

9. Procédé selon la revendication 8, dans lequel on amène le casque (48) en position de collage en guidant le casque (48) sur le châssis (28) portant la structure (10).

10. Procédé selon l'une quelconque des revendications 8 et 9, dans lequel on bride le casque (48) sur le châssis (28) portant l'ossature (10), avant de presser le panneau (12) contre celle-ci.

11. Procédé selon l'une quelconque des revendications 7 à 10 dans lequel, avant de presser localement le panneau (12) contre l'ossature ajourée (10), on maintient au moins un rebord en porte à faux de celle-ci au moyen d'organes de maintien (60) portés par le casque de collage (48).

12. Procédé selon l'une quelconque des revendications 2 à 11, dans lequel on monte la structure (10) sur le châssis rigide (28) à un poste de montage de ladite structure, en assemblant des éléments constitutifs de celle-ci sur un gabarit de montage (32) fixé à un bâti (30), le gabarit de montage et le bâti formant le châssis rigide, et dans lequel on amène ensuite le châssis rigide (28) portant la structure (10) à un poste de collage, où le panneau (12) est collé sur la structure (10).

13. Procédé selon l'une quelconque des revendications précédentes, appliqué à l'assemblage d'un revêtement (12) formant le panneau souple sur une ossature (10) formant la structure, lors de la fabrication d'un bord d'attaque d'aéronef.

14. Installation de pré-assemblage d'un panneau souple (12) sur une face exterieurs d'une ossature ajourée (10), élastiquement déformable et présentant une plus grande rigidité que le panneau, avant la fixation du panneau (12) sur l'ossature (10) par des organes de fixation mécaniques, installation **caractérisée en ce qu'**elle comprend des moyens de collage à froid comportant :
- un châssis rigide (28) apte à recevoir ladite ossature ajourée (10), ledit châssis intégrant des moyens (78) pour positionner le panneau (12) sur l'ossature (10) ; et
- un casque de collage rigide (48) doté d'un évidement (49) de forme sensiblement complémentaire de la forme extérieure du panneau (12), des moyens de mise en pression locale intégrant des joints gonflables (54, 56) étant montés dans l'évidement (49), principalement en face de régions non ajourées de l'ossature (10), de façon à presser le panneau (12) contre celle-ci.

15. Installation selon la revendication 14, dans laquelle les joints gonflables comprennent des joints linéaires (54) et des joints locaux (56).

16. Installation selon l'une quelconque des revendications 14 et 15, dans laquelle les moyens de mise en pression locale comprennent des moyens pour assurer une mise en pression séquentielle des joints gonflables (54, 56) en commençant par les joints situés en face d'une région centrale du panneau (12) et en terminant par les joints situés en face de régions d'extrémité du panneau.

17. Installation selon l'une quelconque des revendications 14 à 16, dans laquelle le casque de collage (48) coopère avec le châssis (28) portant la structure (10) par des moyens de guidage (64,68).

18. Installation selon l'une quelconque des revendications 14 à 17, dans laquelle le casque de collage (48) est apte à être relié au châssis (28) portant la structure (10) par des moyens de bridage (65,74).

19. Installation selon l'une quelconque des revendications 14 à 18, dans laquelle le casque de collage (48) comporte au moins un organe d'appui escamotable (60), apte à être placé derrière un rebord en porte à faux de la structure (10).

20. Installation selon l'une quelconque des revendications 14 à 19, dans laquelle le châssis rigide (28) comprend un gabarit de montage (32) fixé sur un bâti (30), apte à être déplacé entre un poste de montage de la structure (10), un poste de collage du panneau (12) sur la structure (10) et un poste de fixation du panneau (12) sur la structure (10).

## Patentansprüche

1. Verfahren zum Montieren einer flexiblen Platte (12) auf einer offenen Struktur (10), die elastisch verformbar ist und eine größere Steifigkeit als die Platte aufweist, wobei man nacheinander eine Vormontage und dann eine Befestigung der Platte (12) auf der Struktur (10) mittels mechanischer Befestigungsorgane durchführt, **dadurch gekennzeichnet, dass** man die Vormontage durch eine Kaltverklebung durchführt.

2. Verfahren nach Anspruch 1, wobei man die Kaltverklebung durchführt, indem man die Struktur (10) auf einem starren Rahmen (28) montiert, die Platte (12) unter Zwischenfügung von Klebstoff auf der Struktur (10) positioniert und die Platte (12) gegen die Struktur (10) drückt.

3. Verfahren nach Anspruch 2, angewandt auf eine Struktur in Form eines durchbrochenen Gerippes (10), wobei man die Platte (12) lokal gegen das Gerippe (10) drückt, hauptsächlich in seinen nicht durchbrochenen Bereichen.

4. Verfahren nach Anspruch 3, angewandt auf ein durchbrochenes Gerippe (10), das im Wesentlichen C-förmige Rippen (16) sowie Organe (22, 24, 26) umfasst, die die Rippen (16) verbindende Aussteifungen bilden, wobei man die Platte (12) gegen die Organe (22, 24, 26) im Wesentlichen über ihre gesamte Länge drückt, und man die Platte (12) gegen die Rippen (16) an lokalisierten Stellen drückt, die zwischen den Aussteifungen bildenden Organen (22, 24, 26) liegen.

5. Verfahren nach Anspruch 4, angewandt auf ein durchbrochenes Gerippe (10), dessen Rippen (16) einen veränderlichen Krümmungsradius haben, der in einem Zentralbereich einen minimalen Wert aufweist, wobei man ferner die Platte (12) gegen die Zentralbereiche der Rippen (16) im Wesentlichen über die gesamte Länge des durchbrochenen Gerippes (10) drückt.

6. Verfahren nach Anspruch 5, bei dem man die Platte (12) in fortlaufender Weise gegen das durchbrochene Gerippe (10) drückt, wobei man zuerst die Platte gegen die Zentralbereiche der Rippen (16) drückt, und dann nach und nach bis zu Endbereichen der Rippen (16).

7. Verfahren nach einem der Ansprüche 3 bis 6, wobei man die Platte (12) mittels aufblasbarer Verbinder (54, 56) gegen das durchbrochene Gerippe (10) drückt, die in einer starren Klebhaube (48) montiert sind.

8. Verfahren nach Anspruch 7, bei dem man anfänglich die Platte (12) ohne Zwischenfügung von Klebstoff auf dem Rahmen (28) positioniert, der das durchbrochene Gerippe (10) trägt; man dann die Haube (48) in die Klebposition bringt, um das Halten der Platte (12) sicherzustellen, man die die Platte (12) tragende Haube (48) vom Gerippe (10) entfernt, man den Klebstoff aufbringt, und man die Haube (48) erneut in die Klebposition bringt, um die Platte (12) gegen das Gerippe (10) zu drücken.

9. Verfahren nach Anspruch 8, wobei man die Haube (48) in die Klebposition bringt, indem man die Haube (48) auf dem die Struktur (10) tragenden Rahmen (28) führt.

10. Verfahren nach einem der Ansprüche 8 und 9, wobei man die Haube (48) auf dem das Gerippe (10) tragenden Rahmen (28) anflanscht, bevor man die Platte (12) dagegen drückt.

11. Verfahren nach einem der Ansprüche 7 bis 10, wobei man, bevor man lokal die Platte (12) gegen das durchbrochene Gerippe (10) drückt, wenigstens einen vorstehenden Rand desselben mittels Halteorganen (60) hält, die von der Klebhaube (48) getragen werden.

12. Verfahren nach einem der Ansprüche 2 bis 11, wobei man die Montage der Struktur (10) auf dem starren Rahmen (28) an einer Station zur Montage der Struktur vornimmt, indem man Bestandteile derselben auf einer Montagelehre (32) anordnet, die an einem Gestell (30) befestigt ist, wobei die Montagelehre und das Gestell den starren Rahmen bilden, und wobei man anschließend den die Struktur (10) tragenden starren Rahmen (28) zu einer Klebstation bringt, wo die Platte (12) auf die Struktur (10) geklebt wird.

13. Verfahren nach einem der vorhergehenden Ansprüche, angewandt auf die Montage einer Verkleidung, die die flexible Platte bildet, auf einem Gerippe (10), das die Struktur bildet, während der Herstellung einer Vorderkante eines Luftfahrzeugs.

14. Anlage zur Vormontage einer flexiblen Platte (12) auf einer Außenfläche eines durchbrochenen Gerippes (10), das elastisch verformbar ist und eine größere Steifigkeit als die Platte aufweist, vor der Befestigung der Platte (12) am Gerippe (10) mittels mechanischer Befestigungsorgane, **dadurch gekennzeichnet, dass** sie Mittel zur Kaltverklebung aufweist, die umfassen:
- einen starren Rahmen (28), der dazu ausgelegt ist, das durchbrochene Gerippe (10) aufzunehmen, wobei der Rahmen Mittel (78) zum Positionieren der Platte (12) auf dem Gerippe (10) enthält; und
- eine starre Klebhaube (48), die mit einer Ausnehmung (49) mit einer zur Außenform der Platte (12) im Wesentlichen komplementären Form ausgestattet ist, wobei Mittel zum lokalen Unter-Druck-Setzen, welche aufblasbare Verbinder (54, 56) enthalten, in der Ausnehmung (49) im Wesentlichen gegenüber nichtdurchbrochenen Bereichen des Gerippes (10) montiert sind, um die Platte (12) gegen diese zu drücken.

15. Anlage nach Anspruch 14, bei der die aufblasbaren Verbinder Linearverbinder (54) und lokale Verbinder (56) umfassen.

16. Anlage nach einem der Ansprüche 14 und 15, wobei die Mittel zum lokalen Unter-Druck-Setzen Mittel umfassen, die ein sequentielles Unter-Druck-Setzen der aufblasbaren Verbinder (54, 56) sicherstellen, indem sie mit Verbindem beginnen, die gegenüber einem Zentralbereich der Platte (12) liegen, und mit Verbindern aufhören, die gegenüber Endbereichen der Platte liegen.

17. Anlage nach einem der Ansprüche 14 bis 16, wobei die Klebhaube (48) mit dem Rahmen (28) zusammenwirkt, der die Struktur (10) trägt, und zwar mittels Führungsmitteln (64, 68).

18. Anlage nach einem der Ansprüche 14 bis 17, wobei die Klebhaube (48) dazu ausgelegt ist, mittels Flanschmitteln (65, 74) mit dem die Struktur (10) tragenden Rahmen (28) verbunden zu sein.

19. Anlage nach einem der Ansprüche 14 bis 18, wobei die Klebhaube (48) wenigstens ein einziehbares Druckorgan (60) umfasst, das dazu ausgelegt ist, hinter einem vorstehenden Rand der Struktur (10) plaziert zu sein.

20. Anlage nach einem der Ansprüche 14 bis 19, wobei der starre Rahmen (28) eine Montagelehre (32) umfasst, die an einem Gestell (30) befestigt ist, das dazu ausgelegt ist, zwischen einer Station zur Montage der Struktur (10), einer Station zum Kleben der Platte (12) auf die Struktur (10) sowie einer Station zum Befestigen der Platte (12) auf der Struktur (10) verlagert zu werden.

## Claims

1. Process for assembly of a flexible panel (12) on an open, elastically deformable structure (10) that is stiffer than the panel consisting of a number of steps in sequence, namely pre-assembly and then attachment of the panel (12) onto the structure (10) using mechanical attachment devices, **characterized in that** the pre-assembly is done by cold gluing.

2. Process according to claim 1, in which the cold gluing is done by assembling the structure (10) onto a rigid chassis (28), by positioning the panel (12) on the structure (10) with insertion of glue and pressing the panel (12) into contact with the structure (10).

3. Process according to claim 2 applied to a structure with a perforated framework (10), in which the panel (12) is locally pressed into contact with this framework (10), mainly in unperforated parts of the framework.

4. Process according to claim 3 applied to a perforated framework (10) comprising essentially C-shaped ribs (16) and devices (22, 24, 26) forming stiffeners connecting these ribs together, in which the panel (12) is pressed into contact with these devices (22, 24, 26) over most of their length, and the panel (12) is also pressed into contact with these ribs (16) at local positions between devices (22, 24, 26) forming stiffeners.

5. Process according to claim 4, applied to a perforated framework (10) in which the radius of curvature of the ribs (16) is variable, with a minimum value in the central region, the panel (12) is also pressed into contact with the central regions of the ribs (16) over most of the length of the perforated framework (10).

6. Process according to claim 5, in which the panel (12) is progressively pressed into contact with the perforated framework (10), firstly by bringing the panels into contact with the said central regions of the ribs and then progressively working towards the end regions of the ribs (16).

7. Process according to any one of the claims 3 to 6, in which the panel (12) is pressed into contact with the perforated framework (10) by means of inflatable joints (54, 56) installed in a rigid gluing cap (48).

8. Process according to claim 7, in which the panel (12) is initially put into position on the chassis (28) supporting the perforated framework (10) without inserting glue, the cap (48) is then moved into the gluing position to hold the panel (12) in position, the cap (48) supporting the panel (12) is moved away from the framework (10), the glue is applied, and the cap (48) is brought back into the gluing position to press the panel (12) into contact with the framework (10).

9. Process according to claim 8, in which the cap (48) is moved into the gluing position by guiding the cap (48) onto the chassis (28) supporting the structure (10).

10. Process according to either of the claims 8 and 9, in which the cap (48) is clamped onto the chassis (28) supporting the framework (10) before pressing the panel (12) into contact with the latter.

11. Process according to any one of the claims 7 to 10, in which at least one edge is kept overhanging the perforated framework (10) before the panel (12) is locally pressed into contact with said perforated framework (10), using maintaining devices (60) carried on the gluing cap (48).

12. Process according to any one of the claims 2 to 11, in which the structure (10) is installed on the rigid chassis (28) at an assembly station for this structure by assembling its component elements on an assembly template (32) fixed to a frame (30), the assembly template and the frame forming the rigid chassis, and in which the rigid chassis (28) supporting the structure (10) is transferred to a gluing station, where the panel (12) is glued to the structure (10).

13. Process according to any one of the preceding claims, applied to the assembly of a skin (12) forming the flexible panel on a framework (10) forming the structure, when an aircraft leading edge is being manufactured.

14. Installation for pre-assembly of a flexible panel (12) on an elastically deformable, outer face of a perforated framework (10) with greater stiffness than the panel, before the panel (12) is attached to the structure (10) using mechanical attachment devices, the said installation comprising a rigid chassis (18) able to receive said perforated framework (10), said chassis integrating means (78) for positioning the panel (12) on the framework (10) and a rigid gluing cap (48) having a recess (49) with a shape substantially complimentary to the external shape of the panel (12), local pressurizing means integrating inflatable joints (54, 56) being installed in the recess (49), mainly facing unperforated regions of the framework (10), so as to press the panel (12) against the same.

15. Installation according to claim 14, in which the inflatable joints comprise linear joints (54) and local joints (56).

16. Installation according to either of the claims 14 and 15, in which the local pressurization means comprise means of sequentially pressurizing the inflatable joints (54, 56) beginning with the joints facing a central region of the panel (12) and finishing with joints facing end regions of the panel.

17. Installation according to any one of the claims 14 to 16, in which the gluing cap (48) cooperates with the chassis (28) supporting the structure (10) by guide means (64, 68).

18. Installation according to any one of the claims 14 to 17, in which the gluing cap (48) can be connected to the chassis (28) supporting the structure (10) by clamping means (65, 74).

19. Installation according to any one of the claims 14 to 18, in which the gluing cap (48) comprises at least one retractable bearing device (60) that can be placed behind an overhanging edge of the structure (10).

20. Installation according to any one of the claims 14 to 19, in which the rigid chassis (28) comprises an assembly template (32) fixed to a frame (30) that can be moved between a structure (10) assembly station, a gluing station at which the panel (12) is glued to the structure (10), and an attachment station in which the panel (12) is attached to the structure (10).
